(19) Europäisches Patentamt

European Patent Office

Office européen des brevets

(11) **EP 0 546 445 B2**

(12) **NEUE EUROPÄISCHE PATENTSCHRIFT**

(45) Veröffentlichungstag und Bekanntmachung des Hinweises auf die Entscheidung über den Einspruch:
**17.11.2004   Patentblatt 2004/47**

(45) Hinweis auf die Patenterteilung:
**24.06.1998   Patentblatt 1998/26**

(21) Anmeldenummer: **92120615.7**

(22) Anmeldetag: **03.12.1992**

(51) Int Cl.⁷: **H04B 7/26**, H04L 1/06

(54) **Verfahren zum Betrieb eines digitalen, zellularen Mobilkommunikationsnetzes und ein nach dem Verfahren arbeitendes Mobilkommunikationsnetz**

Method for controlling a digital, cellular mobile communication network and mobile communication network using that method

Méthode de commande d'un réseau de communication mobile numérique cellulaire et réseau de communication mobile utilisant cette méthode

(84) Benannte Vertragsstaaten:
**AT BE CH DE DK ES FR GB GR IT LI LU MC NL PT SE**

(30) Priorität: **11.12.1991   DE 4140742**

(43) Veröffentlichungstag der Anmeldung:
**16.06.1993   Patentblatt 1993/24**

(73) Patentinhaber: **DETECON DEUTSCHE TELEPOST CONSULTING GmbH 53175 Bonn (DE)**

(72) Erfinder:
 • **Schmidt, Werner Artur Karl Eugen, Dr.-Ing. Co. Roscommon (IE)**
 • **Stahl, Hans-Joachim, Dr.-Ing. W-5300 Bonn 2 (DE)**

(74) Vertreter: **Riebling, Peter, Dr.-Ing. Patentanwalt Postfach 31 60 88113 Lindau (DE)**

(56) Entgegenhaltungen:
   **DE-A- 3 338 510          DE-A- 3 744 075**

 • **PATENT ABSTRACTS OF JAPAN Bd. 015, Nr. 438 (E-1128) 30 Oktober 1991 & JP-A-03 179 820 (NTT) 05 August 1991**
 • **THE TRANSACTIONS OF THE INSTITUTE OF ELECTRONICS, INFORMATION AND COMMUNICATION ENGINEERS Bd. E74, Nr. 6 , Juni 1991 , TOKYO,JP; Seiten 1512 - 1521 XP262308 SEIICHI SAMPEI 'Development of Japanese Adaptive Equalizing Technology toward High Bit Rate Data Transmission in Land Mobile Communications'**

EP 0 546 445 B2

**Beschreibung**

Gegenstand der Erfindung ist ein Verfahren zum Betrieb eines digitalen zellularen Mobilkommunikationsnetzes nach dem Oberbegriff des Patentanspruchs 1.

Digitale zellulare Mobilkommunikationsnetze versorgen Mobilstationen (MS) von Funkfeststationen aus über TDM (Time Division Multiplex) oder CDM (Code Division Multiplex) d.h. die MS werden erreicht durch die koordinierte Zusammenfassung mehrerer Informationsströme an einem Ort durch eine zentrale Instanz, z.B. durch Modulation auf einen gemeinsamen Träger unter einem gemeinsamen Takt vor deren Aussendung. In umgekehrter Richtung, d. h. von den MS zur Feststation besteht das Erfordernis nach Vielfachzugriff, das ist die Überlagerung mehrerer zunächst unkoordiniert vorliegender und an verschiedenen Orten entstehender Informationsströme auf einem gemeinsamen Medium. Bei digitalen Netzen wird hierbei zwischen TDMA (Time Division Multiplex Access) und CDMA (Code Division Multiple Access) unterschieden.

Die Prinzipien TDM-TDMA und CDM-CDMA basieren darauf, daß die Bitrate bei der Übertragung, auch Chiprate genannt, durch Zeitkompression (bei TDM-TDMA) beziehungsweise durch Codespreizung (bei CDM-CDMA) wesentlich höher ist als die Nutzbitrate der einzelnen übertragenen Informationsströme.

Dabei werden die von der Feststation und genauso von der Mobilstation ausgesendeten Signale zwangsläufig bei ihrer Funkausbreitung Laufzeitunterschiede aufweisen und zwar je nachdem, ob es sich um direkt einfallende Signale von Sender zu Empfänger oder um reflektierte Signale handelt (Mehrwegausbreitung). Dies führt im Empfänger zu Verzerrungen, sogen. Intersymbol-Interferenzen, die keinen störungsfreien Empfang zulassen.

Bisher bekannte Systeme dieser Art verwenden deshalb im Empfänger(!) einen automatisch durch Vergleichsmessungen im Kanal justierten Laufzeitentzerrer. Prinzipiell wird jedes empfangene Signal in der Mobilstation zunächst entzerrt.

Nachteil des bekannten Verfahrens ist jedoch, daß in der Mobilstation unter relativ großem Aufwand ein Entzerrer verwendet werden muß, der in Folge der äußerst kurzen Zeitabläufe und der dadurch bedingten Hochstrom-Logik-IC's einen großen Anteil am Energiebudget der Mobilstation beinhaltet.

Dadurch werden zunächst die Herstellungskosten der Mobilstationen erhöht und zum anderen ergibt sich ein höherer Stromverbrauch. Im übrigen ist das Signal-Interferenz-Verhältnis verbesserungsfähig.

Ein weiterer Nachteil ist, daß bei ungünstigen Ausbreitungsverhältnissen, z.B. in bergigem Gelände, die Laufzeitunterschiede im Mehrwegeprofil so groß sein können, daß sie durch den Entzerrer im Empfänger nicht mehr bewältigt werden, und damit kein störungsfreier Empfang möglich ist. Auch dagegen schafft das erfindungsgemässe Verfahren Abhilfe.

Aus der JP-A-3 179 820 (Patent Abstracts of Japan) ist eine Übertragungseinrichtung für ein TDD-Mobilkommunikationssystem bekannt geworden, bei der die Basisstation über eine Einrichtung verfügt, durch welche die Charakteristik des Übertragungskanals gemessen werden kann. Durch einen Vorverzerrer kann dann das von der Basisstation abgestrahlte Signal entsprechend der gemessenen Charakteristik des Übertragungskanal derart vorverzerrt werden, daß die Verzerrungen des Übertragungskanals ausgeglichen werden.

Die DE-A-33 38 510 betrifft ein Verfahren zur Wiedergewinnung der Information eines Datensignals bei Mehrwegeübertragung, bei dem einzelne, sich auf unterschiedlichen Ausbreitungswegen ausbreitenden Signalanteile empfangen und auf Vollständigkeit ihrer Zeichenstruktur überprüft werden. Ferner wird die gegenseitige zeitliche Verschiebung der Signalanteile ermittelt, so daß die Signalanteile miteinander verglichen und ausgewertet werden können.

Aufgabe der Erfindung ist es, ein Verfahren zum Betrieb eines digitalen, zellularen Mobilkommunikationsnetzes und ein nach dem Verfahren arbeitendes Mobilkommunikationsnetz vorzuschlagen, das es erlaubt, den Entzerrer in der Mobilstation einzusparen bzw. in seinem Aufbau erheblich zu vereinfachen. Ferner soll die Übertragungsqualität verbessert werden.

Zur Lösung der gestellten Aufgabe ist das Verfahren durch die technische Lehre des Anspruchs 1 gekennzeichnet.

Kern der Erfindung ist, daß die im Empfänger der Feststation gemessenen Laufzeitunterschiede durch Mehrwegeausbreitung, das Mehrwegeprofil, des von der MS gesendeten Signals nicht nur zur Entzerrung dieses Signals, sondern auch zur Entzerrung des von der Feststation zur MS zu übertragenden Signals herangezogen wird.

Die von der Mobilstation in Richtung zur Feststation gesendeten Signale werden also auf ihre Laufzeitunterschiede untersucht und entsprechend dieser Laufzeitunterschiede wird ein in der Feststation angeordneter Sendevorverzerrer angesteuert, der dann die entsprechende Mobilstation ansteuert.

Die adaptiven Laufzeitentzerrer in den Empfängern der MS werden abgeschaltet und als adaptive Vorverzerrer in den Sendern der Feststationen ausgebildet. Der Übertragungsweg zur MS wirkt demzufolge als Entzerrer. Es findet also eine Vertauschung der Reihenfolge von Kanal und Entzerrer statt. Es geht darum, den Entzerrer in der MS zur Entzerrung der Intersymbol-Interferenzen aufgrund der Mehrwegeausbreitung erheblich zu vereinfachen. Das geht allerdings zunächst nur, wenn eine Duplexverbindung zwischen MS und FS besteht, also z.B. auf den Sprechkanälen, nicht auf den Organisationskanälen, auf denen Verteilerinformationen an alle MS von der FS gesendet werden. Immerhin kann der Entzerrer aber während der Sprach- oder Datenübertragung abgeschaltet oder in einen stromsparenden Einfach-Modus geschaltet werden.

Dabei wird von folgenden Abläufen ausgegangen:

- Zur Bestimmung der Laufzeitdifferenz der Signale der an ständig wechselnden Orten befindlichen MS werden die Laufzeiten der MS-Signale in der Feststation gemessen und zur optimalen elektronischen Einstellung des Sendevorverzerrers der Feststation benutzt.

- Die Signale kommen somit nach Durchlaufen des Funkfeldraumes entzerrt am Empfänger der MS an. Die Einzelbeträge überlagern sich zeitgleich.

- Wegen der zufälligen und nicht kontrollierbaren Phasenlage der Einzelsignale kann es dabei zu einer Verstärkung des Rayleigh-Fading kommen, was durch eine zeitliche Staffelung der Ankunftszeitpunkte und einen dafür ausgelegten Empfänger ausgeglichen wird.

Durch die vorgeschlagene Vertauschung der Reihenfolge von Kanal und Entzerrer ergibt sich der Vorteil, daß der vorher in der Mobilstation vorhandene Laufzeitentzerrer nun erfindungsgemäss abgeschaltet werden kann und statt dessen ein aktiver Vorverzerrer in der Feststation verwendet wird.

Damit ergibt sich der Vorteil, daß durch Abschalten des Laufzeitentzerrers in der Mobilstation die Energiebilanz der Mobilstation verbessert werden kann, weil durch die Abschaltung dieses wesentliche Leistung der Mobilstation verschlingenden Bauteiles die Betriebszeit der Mobilstation (bezogen auf eine gleichbleibende Akkumulatoren-Leistung) verlängert werden kann. Im übrigen ergibt sich auch eine Verbesserung des Signal-Interferenz-Verhältnisses, das sich seinerseits in eine geringere Sendeleistung umsetzen lässt oder bei Beibehaltung der bisherigen Werte zu geringeren Störungen des Funkkanals und zu höherer Dienstgüte führt.

Sendet die Feststation ein Signal, z.B. einen kurzen Rechteckimpuls, an einen Empfänger MS, der sich im Abstand L von der FS befindet, dann erreicht dieser Impuls in der Regel die MS auf mehreren unterschiedlichen Wegen, die auch durch unterschiedliche Laufzeiten gekennzeichnet sind. Die kürzeste Laufzeit hat der direkte Weg, nämlich tL . Alle andere Wege kommen durch Reflexionen zustande und haben Zusatzlaufzeiten $\Delta$ti zu tL. Alle Reflexionen, die zu einem Zeitpunkt T ankommen, stammen von Reflektoren, die auf einer Ellipse mit den beiden Brennpunkten FS und MS liegen, wobei T der Länge der großen Achse entspricht (Fadenkonstruktion einer Ellipse). Die Amplitude, mit der der direkte Weg und die Reflexionen bei der MS ankommen, werden nur durch die Dämpfungen auf diesen Wegen bestimmt. Das in der MS ankommende Summensignal als Reaktion auf das gesendete Signal r(t) ist die Impulsantwort h(t) des Funkübertragungskanals. Diese wird auch Mehrwegeprofil oder Pfadprofil genannt.

Sendet die FS ein beliebiges Signal s(t) an die MS, so empfängt diese das Faltungssignal

$$e(t) = s(t) * h(t).$$

Ist die Symboldauer von s(t) kürzer als h(t), so führt das zu Intersymbol-Interferenzen. Diese müssen vor der Weiterverarbeitung in der MS durch einen Entzerrer beseitigt werden.

Zur Bestimmung des Mehrwegeprofils, und damit zur Einstellung des Entzerrers in der MS, sendet die FS als Teil der zu übertragenen Information ein Trainingssignal (bei GSM ist das die sogenannte Midamble), das der MS bekannt ist. Durch Korrelation des empfangenen mit dem gespeicherten Trainingssignal wird das Mehrwegprofil bestimmt.

Anschaulich und aus Messungen ist klar, daß es zu jedem einzelnen Weg von FS zu MS zum gleichen Zeitpunkt und am gleichen Ort diesen Weg auch in umgekehrter Richtung von MS zu FS gibt, nämlich über denselben Reflektor. Daraus folgt, daß das Mehrwegeprofil reziprok, also in beiden Richtungen praktisch gleich ist.

Erfindungsgemäss soll nun die FS den Kanal ausmessen (was sie sowieso für ihren eigenen Empfang macht), den Vorverzerrer im Sendezweig genau so einstellen, wie ihren eigenen Entzerrer im Empfangszweig, und alle Verhältnisse bleiben so wie eben dargestellt, nur eben mit abgeschaltetem Entzerrer in der MS. Die MS erhält dann bereits ein entzerrtes Signal, d.h. alle Signalanteile durch Mehrwegausbreitung sind am Ort der MS auf einen Zeitpunkt konzentriert.

Diese Betrachtung gilt nur für Basisbandsignale, nicht für modulierte Signale. Bei diesen überlagern sich die Signalanteile nicht leistungsmässig, sondern gemäss ihrer jeweiligen Phasenlagen. Diese aber sind in beiden Richtungen unterschiedlich. Wenn alle Anteile phasenrichtig ankommen, überlagern sie sich additiv, also wie in der Basisbandbetrachtunq. Sie können sich aber in ungünstigen Verhältnissen auch auslöschen. Dadurch entsteht Fading.

Als Abhilfe dagegen wird das Signal im Sendezweig durch den Vorverzerrer nicht so entzerrt, daß sich alle Einzelpfade in der MS auf einen Zeitpunkt konzentrieren, sondern so, daß sie auf beispielsweise zwei oder drei Zeitpunkte mit definierten, ebenfalls vorher festgelegten Zeitabständen konzentriert werden. Diese Abstände können der Einfachheit halber z.H. gerade gleich der Bitdauer gewählt werden. Die Signale an jedem einzelnen dieser Zeitpunkte ist zwar immer noch Fading unterworfen, aber die Wahrscheinlichkeit, daß sie alle gleichzeitig einzeln ausgelöscht sind, ist geringer.

Nun wird der Empfänger so ausgelegt, daß er dieses vorher festgelegte Pfadprofil entzerren kann. Die MS hat jetzt doch wieder einen Entzerrer, aber einen einfachen. Im einfachsten Fall, wenn zwei Zeitpunkte im Abstand der Bitdauer gewählt werden, besteht er nur daraus, daß je nach den Amplituden, wie sie bei der Korrelation mit dem Trainingssignal festgestellt werden, vor jedem Abtastwert ein Teil des vorhergehenden Abtastwertes abgezogen wird.

Es ist auch vorgesehen, daß durch die Sendevorverzerrung in der FS eine teilweise Entzerrung des Funkübertragungsweges vorgenommen wird derart, daß die Signalanteile in dem von der Mobilstation empfangenen Mehrwegeprofil in einen vordefinierten Zeitraum fallen. Dabei kann dieser Zeitrau zwei drei oder vier Bitperioden des übertragenen Signals entsprechen.

In der Mobilstation wird ein vereinfachter Empfänger verwendet, der entweder nur den stärksten Pfad in dem vordefinierten Zeitraum auswertet, oder aber die beiden oder die drei stärksten Pfade in dem vordefinierten Zeitraum auswertet und phasenrichtig addiert.

Mit dem gesamten Verfahren kann bei geeigneter Wahl des Modulationsverfahrens auf den kohärenten Empfang, also den Quadraturmodulator in der MS, verzichtet werden. Dies wäre eine weitere signifikante Einsparung.

**Patentansprüche**

1. Verfahren zum Betrieb eines digitalen zellularen Mobilkommunikationsnetzes zur Versorgung von an ständig wechselnden Orten befindlichen Mobilstationen (MS) von Funkfeststationen aus über gemultiplexte Signalströme, wobei umgekehrt auch die einzelnen Mobilstationen (MS) jeweils einen Signalstrom zur Funkfeststation senden, wobei die von der Feststation ausgesendeten Signalströme auf ihrem Weg zur jeweiligen Mobilstation Laufzeitunterschiede durch Mehrwegeausbreitung erfahren, die durch einen Entzerrer vor der Verarbeitung in der Mobilstation ausgeglichen werden können, wobei zur Bestimmung der Laufzeitunterschiede der Signale zwischen der Mobilstation und der Feststation die Laufzeiten der von der Mobilstation zur Feststation gesendeten Signale in der Feststation gemessen werden und daß in Abhängigkeit von den gemessenen Laufzeiten der Mehrwege ein in der Feststation angeordneter Sendevorverzerrer angesteuert wird, der dem ausgesendeten Signalstrom eine zur Kompensation der gemessenen Laufzeitunterschiede entsprechende Verzerrung zuordnet, wobei die Sendevorverzerrungen durch die Messung in den Sprachkanälen realisiert wird, **dadurch gekennzeichnet, daß** der Entzerrer für die Dauer einer Sprach- oder Datenübertragung über Sprachkanäle abgeschaltet oder in einen stromsparenden Modus geschaltet wird.

2. Verfahren nach Anspruch 1, **dadurch gekennzeichnet, daß** durch die Sendevorverzerrung in der FS eine teilweise Entzerrung des Funkübertragungsweges vorgenommen wird derart, daß die Signalanteile in dem von der MS empfangenen Mehrwegeprofil in einen vordefinierten Zeitraum fallen.

3. Verfahren nach Anspruch 2, **dadurch gekennzeichnet, daß** dieser Zeitraum vier (4) Bitperioden des übertragenen Signals entspricht.

4. Verfahren nach Anspruch 2, **dadurch gekennzeichnet, daß** der Zeitraum drei (3) Bitperioden des übertragenen Signals entspricht.

5. Verfahren nach Anspruch 2, **dadurch gekennzeichnet, daß** der Zeitraum zwei (2) Bitperioden des übertragenen Signals entspricht.

6. Verfahren nach einem der Ansprüche 2 bis 5, **dadurch gekennzeichnet, daß** in der MS ein vereinfachter Empfänger verwendet wird, der nur den stärksten Pfad in dem vordefinierten Zeitraum auswertet.

7. Verfahren nach einem der Ansprüche 2 bis 5, **dadurch gekennzeichnet, daß** in der MS ein Empfänger verwendet wird, der die beiden stärksten Pfade in dem vordefinierten Zeitraum auswertet und phasenrichtig addiert.

8. Verfahren nach einem der Ansprüche 2 bis 4, **dadurch gekennzeichnet, daß** in der MS ein Empfänger verwendet wird, der die drei stärksten Pfade in dem vordefinierten Zeitraum auswertet und phasenrichtig addiert.

9. Digitales zellulares Mobilkommunikationsnetz zur Versorgung von an ständig wechselnden Orten befindlichen Mobilstationen (MS) von Funkfeststationen (FS) aus über gemultiplexte Signalströme, wobei auch die einzelne Mobilstation (MS) jeweils einen Signalstrom zur Funkfeststation sendet, und die Signalströme auf ihrem Weg zwischen der Mobilstation zur Funkfeststation und umgekehrt einen durch die Funkausbreitung bedingten Laufzeitunterschied erfahren, der von einer den Signalstrom beeinflussenden Laufzeitkorrektur-Vorrichtung ausgeglichen wird, wobei die Laufzeitkorrektur-Vorrichtung aus einem in der Funkstation angeordneten adaptiven Sendevorverzerrer besteht, wobei die Verzerrung entsprechend der in den Sprachkanälen gemessenen Laufzeit der Signale von der Mobilstation zur Feststation veränderbar ist, **dadurch gekennzeichnet, daß** der Entzerrer in der MS für die Dauer der Sprach- oder Datenübertragung über die Sprachkanäle abgeschaltet oder in einen stromsparenden Modus geschaltet wird.

## Claims

1. A method for the operation of a digital cellular mobile communication network for the supply of mobile stations (MS), situated in constantly changing locations, from fixed radio stations via multiplexed signal currents, in-which in reverse also the individual mobile stations (MS) respectively transmit a signal current to the fixed radio station, with the signal currents transmitted from the fixed station undergoing running time differences through multipath diffusion on their way to the respective mobile station, which running time differences can be adjusted by a rectifying device before processing in the mobile station, in which to determine the running time differences of the signals between the mobile station and the fixed station, the running times of the signals transmitted from the mobile station to the fixed station are measured in the fixed station and that as a function of the measured running times of the multiple paths, a transmission pre-distorting device is controlled, which is arranged in the fixed station and allocates to the transmitted signal current a distortion corresponding to the compensation of the measured running time differences, in which the transmission pre-distortions are realized by measurement in the speech channels, **characterised in that** the rectifying device is disconnected for the duration of a speech- or data transmission via speech channels or is switched into a current-saving mode.

2. A method according to Claim 1, **characterised in that** through the transmission pre-distortion in the FS a partial rectification of the radio transmission path is undertaken such that the signal components in the multipath profile received by the MS fall within a predefined period of time.

3. A method according to Claim 2, **characterised in that** this period of time corresponds to four (4) bit periods of the transmitted signal.

4. A method according to Claim 2, **characterised in that** the period of time corresponds to three (3) bit periods of the transmitted signal.

5. A method according to Claim 2, **characterised in that** the period of time corresponds to two (2) bit periods of the transmitted signal.

6. A method according to one of Claims 2 to 5, **characterised in that** in the MS a simplified receiver is used which only evaluates the strongest path in the predefined period of time.

7. A method according to one of Claims 2 to 5, **characterised in that** in the MS a receiver is used which evaluates and adds in proper phase relation the two strongest paths in the predefined period of time.

8. A method according to one of Claims 2 to 4, **characterised in that** in the MS a receiver is used which evaluates and adds in proper phase relation the three strongest paths in the predefined period of time.

9. A digital cellular mobile communication network for the supply of mobile stations (MS), situated in constantly changing locations, from fixed radio stations (FS) via multiplexed signal currents, wherein also the individual mobile station (MS) respectively transmits a signal current to the fixed radio station, and the signal currents on their way between the mobile station to the fixed radio station and vice versa undergo a running time difference caused by the radio diffusion, which running time difference is adjusted by a running time correction device influencing the signal current, wherein the running time correction device consists of an adaptive transmission pre-distorting device arranged in the radio station, the distortion being able to be changed corresponding to the running time of the signals, measured in the speech channels, from the mobile station to the fixed station, **characterised in that** the rectifying device in the MS is disconnected for the duration of the speech- or data transmission via the speech channels or is switched into a current-saving mode.

## Revendications

1. Procédé pour l'exploitation d'un réseau de communication mobile cellulaire numérique destiné à alimenter des stations mobiles (MS), situées à des endroits qui changent sans cesse, à partir de stations fixes par l'intermédiaire de courants de signaux multiplexés, les stations mobiles individuelles (MS) émettant aussi, à l'inverse, un courant de signaux vers la station fixe, étant précisé que les courants de signaux émis par la station fixe subissent sur la trajectoire qui les mène à la station mobile, en raison de la propagation à plusieurs voies, des différences de temps de propagation qui peuvent être compensées par un correcteur de distorsion avant le traitement dans la station mobile, et que pour définir les différences de temps de propagation des signaux entre les stations mobile et fixe, les temps de propagation des signaux émis par la station mobile vers la station fixe sont mesurés dans la station fixe, et en fonction des temps de propagation des voies qui sont mesurés, un dispositif de prédistorsion d'émission disposé dans la station fixe est déclenché et associe au courant de signaux émis une distorsion correspondant à la compensation des différences de temps de propagation mesurées, les prédistorsions d'émission étant effectuées grâce à la mesure dans les voies de conversation, **caractérisé en ce que** le correcteur de distorsion est arrêté pendant la durée d'une transmission vocale ou de données par l'intermédiaire de voies de conversation, ou passe dans un mode à faible consommation de courant.

2. Procédé selon la revendication 1, **caractérisé en ce que** grâce à la prédistorsion d'émission dans la station fixe (FS), une correction de distorsion partielle de la liaison radio est réalisée de telle sorte que les parts de signaux comprises dans le profil à plusieurs voies reçu par la station mobile (MS) arrivent dans un intervalle de temps prédéfini.

3. Procédé selon la revendication 2, **caractérisé en ce que** cet intervalle de temps correspond à quatre (4) périodes binaires du signal transmis.

4. Procédé selon la revendication 2, **caractérisé en ce que** l'intervalle de temps correspond à trois (3) périodes binaires du signal transmis.

5. Procédé selon la revendication 2, **caractérisé en ce que** l'intervalle de temps correspond à deux (2) périodes binaires du signal transmis.

6. Procédé selon l'une des revendications 2 à 5, **caractérisé en ce qu'**on utilise dans la station mobile (MS) un récepteur simplifié qui n'évalue que le trajet le plus fort dans l'intervalle de temps prédéfini.

7. Procédé selon l'une des revendications 2 à 5, **caractérisé en ce qu'**on utilise dans la station mobile (MS) un récepteur qui évalue les deux trajets les plus forts dans l'intervalle prédéfini et qui les additionne avec la bonne phase.

8. Procédé selon l'une des revendications 2 à 4, **caractérisé en ce qu'**on utilise dans la station mobile (MS) un récepteur qui évalue les trois trajets les plus forts dans l'intervalle de temps prédéfini, et qui les additionne avec la bonne phase.

9. Réseau de communication mobile cellulaire numérique destiné à alimenter des stations mobiles (MS), situées à des endroits qui changent sans cesse, à partir de stations fixes (FS) par l'intermédiaire de courants de signaux multiplexés, la station mobile individuelle (MS) émettant aussi un courant de signaux vers la station fixe, étant précisé que les courants de signaux subissent, sur leur trajectoire qui va de la station mobile à la station fixe et inversement, une différence de temps de propagation, due à la propagation radioélectrique, qui est compensée par un dispositif correcteur de temps de propagation qui influence le courant de signaux, ce dispositif correcteur de temps de propagation se composant d'un dispositif de prédistorsion d'émission adaptatif disposé dans la station radio, étant précisé que la distorsion est variable en fonction du temps de propagation des signaux, mesuré dans les voies de conversation, entre la station mobile et la station fixe, **caractérisé en ce que** le correcteur de distorsion prévu dans la station mobile (MS) est arrêté pendant la durée de la transmission vocale ou de données par l'intermédiaire des voies de conversation, ou passe dans un mode à faible consommation de courant.